# EUROPEAN PATENT APPLICATION

(11) **EP 1 133 166 A2**
(43) Date of publication of application: **12.09.2001**
(21) Application number: 00311371.9
(22) Date of filing: 19.12.2000
(51) Int. Cl.: H04N 1/64

(54) **Using hardware to double the X-dimension in a video frame**

(30) Priority: 06.01.2000 US 477687
(71) Applicant: Hewlett-Packard Company, A Delaware Corporation, Palo Alto, CA 94304 (US)
(72) Inventor: Woods, Scott A., Loveland, CO 80538 (US); Brake, Wilfred F., Fort Collins, CO 80525 (US)
(74) Representative: Jackson, Richard Eric

(57) **Abstract**

The present invention is directed to the use of a specific hardware configuration in a stand-alone camera 100 for decreasing bus bandwidth. In a preferred embodiment, an image capture device 1 captures an original amount of image data. Thereafter, a first image transformation module 18, 19, 20 reduces the original amount of image data in one dimension, resulting in reduced data. In a most preferred embodiment, such first image transformation module halves the X-dimension of the image data. The reduced image data is then communicated across the camera's system bus 6, thus requiring less bandwidth of such bus. Before displaying the image data on a display 14, 16, a second image transformation module 17 receives the reduced image data from the system bus and scales the data back to the original amount, thereby providing sufficient image data for a display by reducing one dimension of the image data to be communicated across the camera's system bus and then sealing the reduced image data up to provide a sufficient amount of data for a display.

## Description

### TECHNICAL FIELD

This invention relates in general to using a computer hardware based scheme for doubling the X-dimension in a video frame such as that used in a Liquid Crystal Display (LCD) of a stand-alone digital still camera.

### BACKGROUND

Display of captured image data may be provided on a variety of devices such as Liquid Crystal Display (LCD) or Cathode Ray Tube (CRT) display devices. In the case of a stand-alone digital still camera, captured image data is most often displayed on a built-in LCD screen for proposes of previewing materials, inspecting post-capture images, etcetera. External CRT devices may also be supported for purposes of visually sharing images with others.

The captured image data of such cameras may be in various formats, such as RGB (red, green, blue format) or YCrCb format. For displaying such data on a LCD screen, a converter, such as a National Television System Committee (NTSC) converter, Systeme Electronique Couleur Avec Memoire (SECAM) converter, or Phase Alteration by Line (PAL) converter, may be utilized for encoding the data to an appropriate video standard. Displaying data in this manner has an advantage over LCDs utilizing a direct digital interface in that it permits common drive signals to an internal LCD or a CRT device external to the stand-alone camera.

Most NTSC converters, for example, are standardized 8-bit devices based on a so-called YCrCb 4:2:2 format wherein 4 complete pixels will consist of four "Y" (luminance) bytes of data, two Cr (chrominance) bytes of data and two Cb (chrominance) bytes of data. Thus, this format yields twice as much luminance data as chrominance data, all of which is represented according to the 4:2:2 ratio, the shorthand for which is represented as YCrCb 4:2:2.

However, these converters, in the course of processing a given image data stream, usually run off of a clock, with a fixed frequency of between 25.54 MHz and 29.5 MHz. The exact frequency depends upon the video standard being utilized, such as whether one is operating according to NTSC, PAL, or SECAM, and whether one is operating in square or rectangular pixel mode. This means that one needs to provide the devices with data at a peak rate of up to 29.5 megabytes per second. This type of standard provision is inherently problematic because, generally speaking, image data is stored in a Synchronous Dynamic Random Access Memory (SDRAM) device and accessed via a system bus by many system components such as a Charge Coupled Device (CCD) controller, image processing module, Central Processing Unit (CPU), etcetera. Bus bandwidth, usually defined as the maximum amount of data that may be transferred over the system bus in a one second period of time, is always finite. In a typical digital still camera, bus bandwidth may have a theoretical limit on the order of a few tens of megabytes per second, and in practice will be less than this due to the arbitration time required to hand the bus off to various system modules. Since up to 29.5 megabytes per second on a limited bandwidth requires an intolerably high portion of the total bandwidth available, this necessarily compromises the availability of the bus to function in the camera.

For example, in a stand-alone digital camera operating in preview mode, one is necessarily constantly exposing the CCD to capture an image, while simultaneously doing image processing (e.g., demosaicing, filtering, color correction, etc.) on each image and sending data to the LCD for display. Most, if not all, of these functions require either writing image data across the bus to the SDRAM (e.g., for the CCD control module), reading data across the bus from the SDRAM (e.g., for the LCD control module), or both (e.g., for the CPU and image processing modules). Such preview function is particularly taxing on the system because unlike other functions, such as post-capture and post-view mode, multiple tasks are required simultaneously. Thus, particularly where the system is trying to multitask, as it necessarily does when utilizing the capturing, storing and processing modes simultaneously, the prior art level of performance is unacceptable.

Different avenues of approach to solving such problems have proved less than ideal thus far. For example, utilization of another standard, such as implementation of a system based on LCDs possessing a direct digital interface utilizing the RGB encoding technology, may result in lower bandwidth requirements for a LCD display. However, such systems are incompatible with driving CRT displays and require additional system hardware. This may be cost prohibitive in a low-cost digital camera. Digital interface LCDs also tend to have a price premium over LCDs with an NTSC/PAL/SECAM compatible analog interface, because of the economy of scale driven by the wide acceptance of these latter devices by the video camcorder industry. Additionally, common operating systems used in digital still cameras, treat all display devices like CRTs. Accordingly, direct digital RGB LCDs are often not supported by the operating system.

To date, designing systems utilizing NTSC/PAL/SECAM compatible LCDs has required the acceptance of the relatively high fixed data rates inherent to the NTSC/PAL/SECAM encoders. Because the data rate to the encoder is fixed and cannot be changed for a given format, any reduction in the required data rate over the system bus must be accomplished in the display block module, which resides between the system bus and the NTSC/PAL/SECAM encoder. A software based scheme may reduce the data storage required for a given image, but cannot remedy the known inefficiencies of the standard YCrCB format, e.g., cannot reduce the bus bandwidth required. Software solutions rely on an approach which occurs in the CPU of the camera. Thus, in a software based approach, the image stored in the SDRAM could be half as big as that required by the NTSC/PAL/SECAM encoder, for example. However the CPU would still have to read this image out of SDRAM, upsample it to the required size, and send it to the display module over the system bus. Thus, such an approach actually requires more bus bandwidth.

### SUMMARY OF THE INVENTION

In view of the above, there is a desire for a system and method for efficiently communicating captured image data between components of a stand-alone digital camera. That is, a desire exists for a system and method that allows for captured image data to be communicated along a system bus to various components of a digital camera, without requiring an unnecessarily large amount of bandwidth. For example, it is desirable to reduce the bandwidth required for communicating image data within a digital camera when operating in a mode that requires multi-tasking, such as a preview mode. There exists a further desire for a system and method that efficiently communicates image data within a digital camera, while still providing a sufficient amount of data to a display, such as a LCD, for an acceptable display quality.

These and other objects, features and technical advantages of the present invention are achieved by a system and method for reducing the bandwidth usage required for communicating image data within a stand-alone digital still camera. Accordingly, a preferred embodiment provides a hardware based implementation, which can reduce the bandwidth usage in a stand-alone digital still image camera when transmitting a data stream to an encoder (e.g., a NTSC/PAL/SECAM encoder) for the purpose of displaying an image on a LCD display and/or a CRT. As further detailed herein, in a preferred embodiment, the above goals are accomplished through the use of a particular internal logic configuration in a display block equipped with registers. The configuration of the particular display block is structured on an Application Specific Integrated Circuit (ASIC) scheme so as to interact with a NTSC/PAL/SECAM encoder in such a manner as to minimize the bandwidth requirements of the display block while presenting data at the necessary rate to an NTSC/PAL/SECAM encoder.

In a preferred embodiment, the X-dimension data is halved, and the image data having a halved X-dimension is communicated within the camera for processing, thereby reducing the bandwidth required for communicating the image data along the camera's system bus. Additionally, once the image data is received by a display block (e.g., Display Module) of the camera, a "doubling module" doubles the X-dimension to provide the data stream expected by the encoder and display (e.g., LCD). Specifically, the impact on the bandwidth of the camera's system bus is minimized by manipulation of the YCrCb 4:2:2 data format so as to halve the X-direction data before communicating the image data along the system bus, and then "double" the X-direction data presented to the display block prior to passing it to the NTSC/PAL encoder. This has the effect of reducing (halving) the amount of data transmitted to the display block, thereby reducing the impact on the system bus bandwidth for running the LCD.

It should be appreciated that a technical advantage of one aspect of the present invention is that a system and method for reducing the bandwidth required for communicating captured image data along a stand-alone digital camera's system bus are provided. That is, the communication of image data along a system bus for running a LCD (or other display) is accomplished in a manner that has a minimal impact on the system bus bandwidth. Accordingly, the impact on the bandwidth when communicating image data in a multi-tasking operation mode, for example, is minimized. A further technical advantage of one aspect of the present invention is that the image data is provided to an encoder and display with sufficient data to allow for display of an image having an acceptable quality. Thus, captured image data may be communicated along a camera's system bus in an efficient manner, while still providing an acceptable quality image to the camera's display.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### DESCRIPTION OF THE DRAWING

For a more complete understanding of the present invention, and the advantages thereof, reference is now made to the following descriptions taken in conjunction with the accompanying drawing, in which:
FIGURE 1 depicts a hardware block diagram of a stand-alone digital still camera using the preferred embodiment for doubling the X-direction in a video frame on a display;
FIGURE 2 depicts a conceptual representation of various color formats for a four pixel, two-dimensional image;
FIGURE 3 depicts a hardware block diagram with the conceptual data flow representation in a prior art system;
FIGURE 4 depicts a hardware block diagram with the conceptual data flow representation in the system of a preferred embodiment of the present invention;
FIGURE 5 depicts a conceptual representation of data flow processing in a prior art display; and
FIGURE 6 depicts a conceptual representation of data flow processing in a display of a preferred embodiment of the present invention.

### DETAILED DESCRIPTION

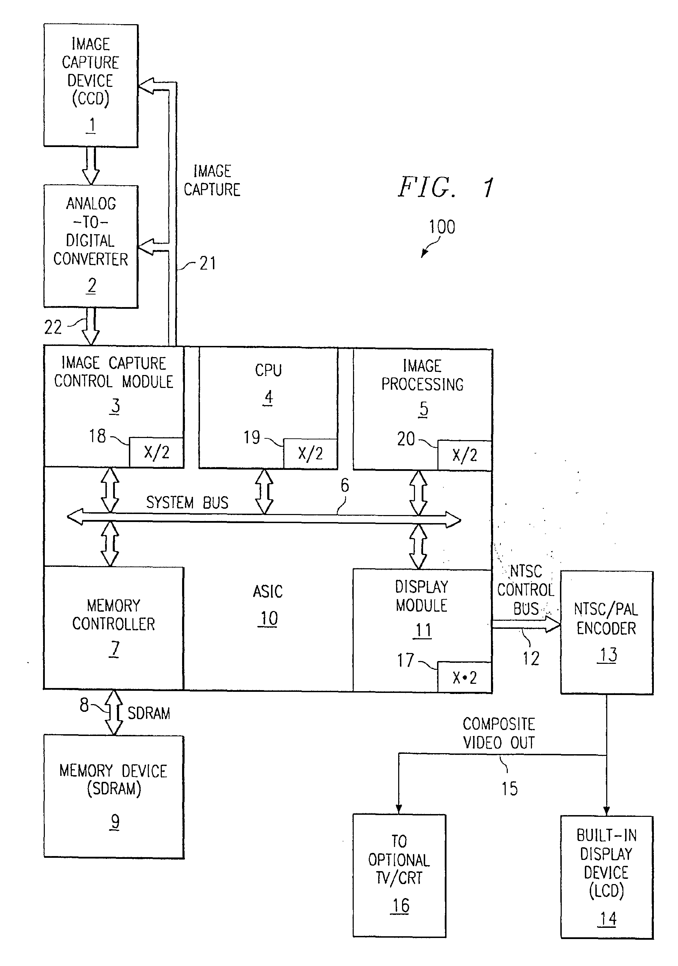

FIGURE 1 shows a block diagram of the hardware system 100 used in a stand-alone digital still camera of a preferred embodiment of the present invention. This system is comprised of an image capture device 1 (preferably a CCD or CMOS sensor); an analog-to-digital (A/D) converter 2; ASIC 10 which preferably includes an image capture control module 3, CPU 4, image processing module 5, memory controller module 7, system bus 6, and display module 11; a memory device 9 (preferably SDRAM), which is connected to ASIC 10 via bus 8; an encoder 13 (preferably NTSC/PAL format, although may be another format such as SECAM); and a display device 14 (preferably LCD). Additionally, a provision is made for displaying an image on TV or CRT 16, which is external to the system, via the video out signal 15.

The above-detailed elements are provided with specific interconnection therebetween. The image capture device 1 and A/D converter 2 for converting the captured analog signals to digital signals are connected directly to the ASIC 10 via digital data bus 22 and A/D control bus 21. The output of the image capture device 1 is connected directly to the input of the A/D converter 2. The output of the A/D converter 2 is connected directly to the ASIC 10 by means of a digital data bus 22, whose width is dependent on the resolution of A/D converter 2. Preferably, this digital data enters the ASIC 10 at image capture control module 3. The image capture control module 3 controls the A/D converter 2 and the image capture device 1. Communication between the memory controller 7 and memory device 9 is via memory bus 8. Communication between the display module 11 and the encoder module 13 is via NTSC control bus 12. The encoder module 13 drives the display device 14 and/or an optional TV/CRT device 16 via the analog video out signal 15.

Each of the aforementioned ASIC 10 elements, as well as the attendant elements such as memory device 9, are ultimately connected to encoder module 13 via connection link 12. Connection link 12 is preferably a NTSC control bus, which is most preferably a 24.5-29.5 megabyte/second digital-type bus. Encoder module 13 is connected to display device 14 and optional TV/CRT device 16 via connection link 15 (preferably composite video out 15).

During operation of the stand-alone digital camera, the hardware of a preferred embodiment operates in the following fashion: an image (i.e., video/image data) is captured by the image capture device 1. Through this image capture device 1, a sampled analog signal is then passed to the A/D converter 2 to be converted to a digital signal ("the data") which is transmitted to ASIC 10 via communication link 22, and passes through image capture control module 3. The image capture control module 3 optionally manipulates data for quality purposes prior to passing it through memory controller 7 to memory device 9 via bus 8. Alternative embodiments of the present invention also contemplate further retrieving the stored data from memory device 9 for processing within the CPU 4 and other units, but the preferred embodiment, in its simplest sense, provides for a peripheral role of the CPU 4 in the overall scheme. In a preferred embodiment, image processing module 5 is in communication with CPU 4 via system bus 6. Furthermore, a preferred embodiment of the described system and method is preferably a hardware instantiation because a similarly fashioned software approach must still send the whole image across the system bus 6 because the image is processed in the CPU 4. Thus, in a preferred embodiment, system bus bandwidth problems of the prior art are alleviated.

Subsequently, display module 11 retrieves the data out of memory device 8 via bus connection link 6 for temporary residence therein. The internal logic 17 is critical to the preferred embodiment because the YCrCb 4:2:2 format requires quantitatively and qualitatively more logic to output the data which comes out in the target sequence. As such, the internal logic 17 is purposely structured as to produce output in the required sequence, specifically, the internal logic will double the X-dimension (i.e., "X ^{*} 2") of the data stream which has been processed, in the various stages, through image capture control module 3, CPU 4 and image processing module 5, all of which are inter-connected via system bus 6. The X-dimension is doubled because, during processing, e.g., via CPU 4, the X-dimension is "halved" (i.e., "X/2") so that, when passing through system bus 6, the reduced X-dimension reduces the bandwidth required therein as indicated within modules 18, 19 and 20. Conceptually speaking, this drops every other column of data, thereby reducing bandwidth. Therefore, the internal logic 17 doubles the X-dimension data to allow for the data to be in the sequence expected by the encoder module 13.

One of image capture control module 3, CPU 4, image processing 5, will have an X-dimension halving module shown as X/2 18, 19, 20 for reducing the data input stream. There are two methods for halving the X-dimension data, the first is to halve the data prior to storage in the memory device. This halving would be performed by the halving module 18 in the image capture control module 3. As data is received from the A/D converter 2, the X-dimension data would be halved prior to inputting the data on system bus 6 and storage in memory device 9 through memory controller 7. This would result in a greatly reduced bus bandwidth usage as both inputting and retrieving from memory device 9 would have reduced bandwidth usage.

The other method is to store all of the X-dimension data in memory device 9 and use either CPU 4 or image processing module 5 with halving modules 19, 20 to reduce the X-dimension data. Halving modules 19, 20 may reduce the data and re-store that data to memory device 9 for later retrieval for display on the built-in display device 14 and/or TV/CRT device 16. In a preferred embodiment, the resulting data having a halved X-dimension is stored in memory device 9 separate from the full resolution data originally captured and stored therein. Reducing the data in this manner allows for reduced bandwidth for system bus 6, while providing the required amount of data at NTSC bus 12 at the time of display. Alternatively, one of halving modules 19, 20 could halve the X-dimension data as it is being retrieved from memory device 9 for other purposes prior to delivery to display module 11. Reducing the data in this manner allows for reduced bandwidth during a portion of the transfer of data across system bus 6, i.e., the bandwidth is reduced as it is being transferred to memory module 11. Note that in a preferred embodiment only one halving module 18, 19, or 20 is needed in ASIC 10 as this function would only need to be carried out once on the data.

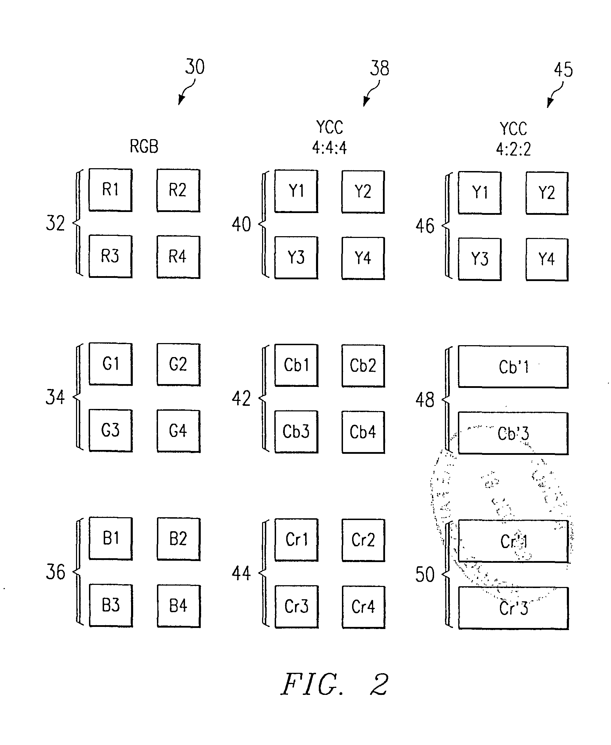

In order to properly understand the detail of the process involved in "halving" and then doubling the X-dimension for output, attention is drawn to FIGURE 2, which is a conceptual representation of various color formats for a four pixel, two-dimensional image. FIGURE 2 depicts equivalent representations in different color spaces (i.e., different color formats). Specifically, the image capture device 1 may capture an image as RGB data, in which after demosaicing and/or other processing each Red is represented at 32 (R₁, R₂, R₃ and R₄), each green represented at 34 (G₁, G₂, G₃ and G₄), and each Blue represented at 36 (B₁, B₂, B₃ and B₄). In the prior art, such RGB data is typically translated into a format such as YCrCb 4:4:4 shown at 38, which details the illuminance values at 40 (Y₁, Y₂, Y₃ and Y₄) and chrominances at 42 (Cb₁, Cb₂, C_{b3} and C_{b4}) and at 44 (Cr₁, Cr₂, Cr₃ and Cr₄), all of which are in groupings of the two-dimensional, four pixel images (i.e., each box represents one byte of data). Thus, as can be seen, the same number of bytes are required to represent an image in YCrCb 4:4:4 format as are required for RGB format.

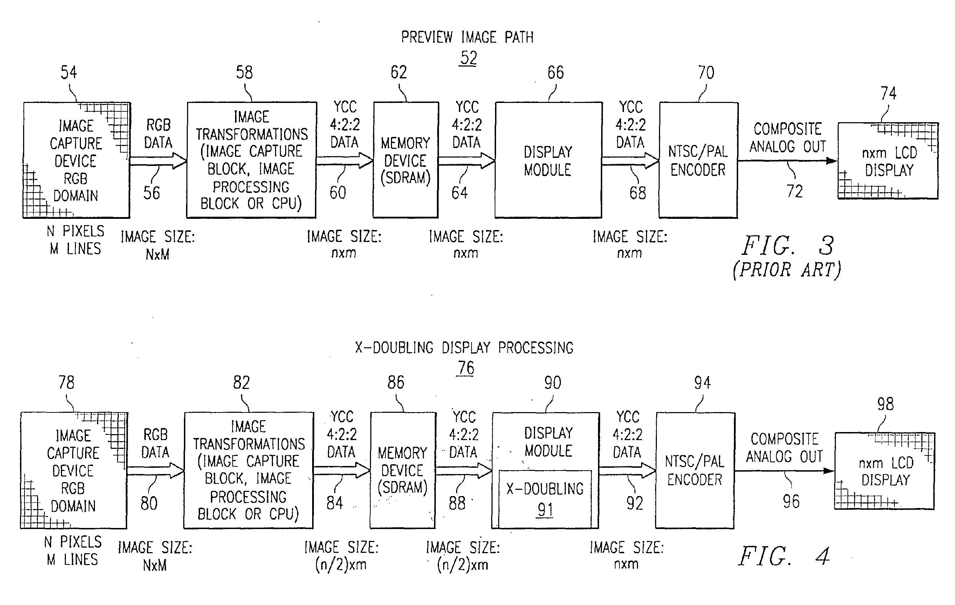

Alternatively, most prior art systems translate captured RGB data into YCrCb 4:2:2 format, which is shown at 45 of FIGURE 2. As shown in FIGURE 2, YCrCb 4:2:2 format includes illuminance values 46 (Y₁, Y₂, Y₃ and Y₄), chrominance values 48 (Cb₁ and Cb₃), and chrominance values 50 (Cr₁ and Cr₃), all of which are in groupings according to the two-dimensional, four pixels images (i.e., each box represents one byte of data). This process is viewed overall, in the context of the prior art hardware blocks in FIGURE 3 where the image capture device 54 captures the data in RGB format according to the number of N pixels by M lines (for an image size of NxM) and communicates the captured RGB data across bus 56 to Image Transformation and Resizing module 58. The image data is then converted to YCrCb 4:2:2 data format having NxM size and is communicated through bus 60 to Memory Device 62, wherein the image data is stored. Thereafter, the image data in YCrCb 4:2:2 format having size NxM is communicated from Memory Device 62 across system bus 64 to Display Module 66, then further across bus 68 to NTSC/PAL Encoder 70 which sends a composite analog signal out 72 to NxM LCD display 74.

A preferred embodiment of the present invention specifically allows for data captured by the image capture device 1 as RGB data to be converted to YCrCb 4:2:2. The process of a preferred embodiment is illustrated in the context of hardware blocks shown in FIGURE 4 where the image capture device 78 captures the data in RGB format according to the number of N pixels by M lines (for an image size of NxM) and communicates the captured RGB data across bus 80 to Image Transformation and Resizing module 82. The image data is then converted to YCrCb 4:2:2 data format having (N/2)xM size. That is, the X-dimension of the data is divided in half, thereby reducing the amount of data required to be communicated over the system bus to various hardware blocks of the system. Thereafter, the image data having size (N/2)xM is communicated through bus 84 to Memory Device 86, wherein the image data is stored. Thereafter, the image data having size (N/2)xM is communicated across system bus 88 to Display Module 90. In accordance with X-doubling module 91 of Display Module 90, the image data is then transformed to size NxM. That is, the X-doubling module 91 doubles the X-dimension of the image data, resulting in the NxM size of data expected by the Encoder 94 and LCD display 98. Display Module 90 then communicates the image data having size NxM across bus 92 to NTSC/PAL Encoder 94, which sends a composite analog signal out 96 to NxM LCD display 98.

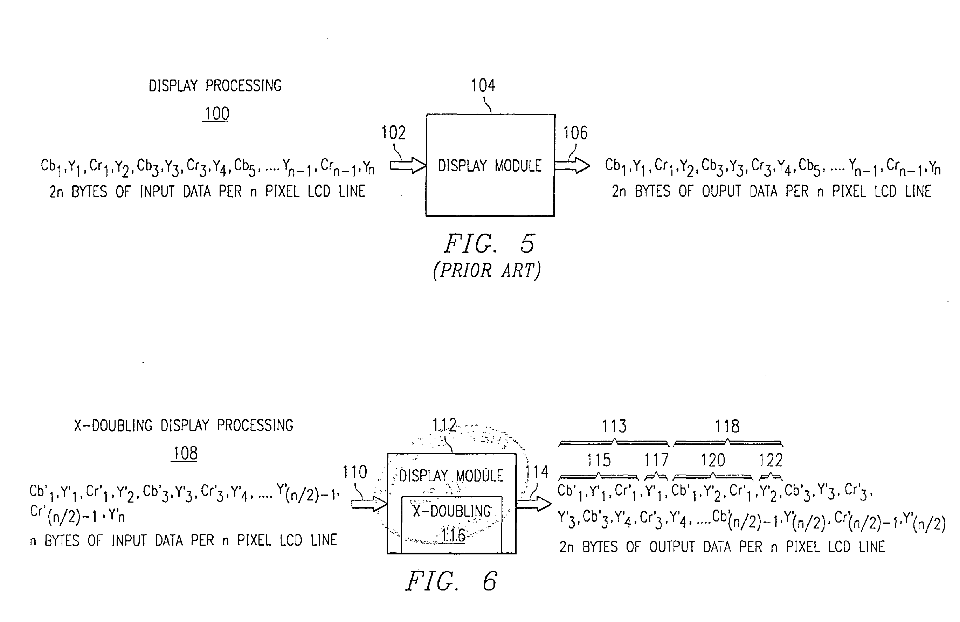

Accordingly, the respective processing of the systems described above will yield the byte streams represented in FIGURES 5 and 6. Specifically, in FIGURE 5, the prior art display processing 100 will send the byte stream at 102 of Cb₁, Y₁, Cr₁, Y₂, Cb₃ Y₃ Cr₃, Y₄, Cb₅...Cbₙ₋₁, Yₙ₋₁, Crₙ₋₁, Yₙ into Display Module 104 and will result in the byte stream 106, which is Cb₁, Y₁, Cr₁, Y₂, Cb₃,Y₃ Cr₃, Y₃, Cr₃, Y₃, Cb₅...Cbₙ₋₁, Yₙ₋₁, Crₙ₋₁, Yₙ, all of which are 2n bytes of output per n pixel LCD line. Thus, the sequence of bytes 102 communicated across the system bus as input to Display Module 104 are 2n bytes of output per n pixel LCD line, which requires an undesirably large amount of the system bus bandwidth.

By contrast, FIGURE 6 depicts the X-doubling display processing where byte stream 110, which represents n bytes of input data per n pixel LCD line is represented as Cb'₁, Y'₁, Cr'₁, Y'₂, Cb'₃, Y'₃, Cr'₃, Y'₄ ... Cb'_{(n/2)-1}, Y'_{(n/2)-1}, Cr'_{(n/2)-1,} Y'_{(n/2)}, all of which will be put through X-doubling logic 116 of Display Module 112 such that the byte stream 114 will be "doubled" to represent 2n bytes of output data per n pixel LCD line, for example:
Cb'₁, Y'₁, Cr'₁, Y'₁, Cb'₁,Y'₂ Cr'₁, Y'₂, Cb'₃, Y'₃, Cr'₃; Y'₃, Cb'₃,Y'₄ Cr'₃, Y'₄ ... Cb'_{(n/2)-1}, Y'_{(n/2)}, Cr'_{(n/2)-1}, Y'_{(n/2)}.

As can be readily ascertained by contrasting the byte stream 110 of a preferred embodiment of the present invention and byte stream 102 of the prior art, bandwidth usage is necessarily reduced via the n/2 inventive methodology, given that the prior art byte stream involves 2n bytes of input data per n pixel LCD line, while the inventive byte stream 110 simply entails n bytes of input data per n pixel LCD line. This results, of course, in a smaller quantity of bytes which need to be transmitted across system bus 6. Additionally, feeding the data 110 through X-doubling logic unit 116 results in a data stream 114 which is 2n bytes of output data per n pixel LCD line. The way in which this doubling is achieved is seen at representative depiction YCrCb 4:2:2 which shows the "doubling" of Cb₁, for example, to take the place of Cb₁ and Cb₂ (i.e., Cb₁ is merely doubled to take the place of Cb₂) and similarly Cb₃ is doubled in lieu of Cb₃ and Cb₄. Similarly, Cr₁ and Cr₃ may be likewise manipulated.

In a preferred environment, however, the data stream from display Module 112 will resemble data stream 114, which will have a fundamental base unit called quad (e.g., quad 113) which is determined in sequence by a successive "Y.'" By way of example, Y'₁ will describe the first quad 113, Y'₂ will describe the second quad, Y'₃ the third quad, and so on. Moreover, as shown in the representative output stream 114 of FIGURE 6, each successive Y'₁ value will be doubled so as to make up for the value not present in the n bytes of data input stream 110. Additionally, to obtain the full 2n bytes of data needed in the output byte stream 114, the "Cb"' values will be repeated (i.e., in a preferred embodiment, the system will utilize only two instances of chrominance values, Cb'₁ and Cb'₃, rather than the four instances of Cb'₁, Cb'₂, Cb'₃ and Cb'₄) and the pattern of which is likewise repeated for the "Cr" values. Thus, as seen in quad 113, the bytes will comprise Cb'₁, Y'₁, Cr'₁ (indicated at 115), and having Y'₁ repeated or doubled (indicated at 117) will comprise the total quad 113 (i.e., Cb'₁, Y'₁, Cr'₁, Y'₁₎. This technique is repeated at next data quad 118, which is dictated by the next successive "Y'" (i.e., Y'₂) and repeats the same "Cb"' and "Cr"' value as previously indicated (i.e., the system repeats "Cb'₁" and "Cr'₁"). This is repeated with the same pattern with each successive "Y"' value dictating the successive quad (of course, the "Cr'₁" and "Cb'₁" values will thereafter shift appropriately to be "Cr'₃" and "Cb'₃", as can be seen in FIGURE 2 and in the representative output stream 114 of FIGURE 6).

Providing data in this way reduces bandwidth usage during processing, yet still provides the human eye with enough information to avoid compromising the visual image quality on the display device 14. However, if such data is sent to a larger display, e.g., TV 16, then image quality may be in some instances noticeably reduced. Thus, in a most preferred embodiment, this technique is utilized in Preview mode of a camera, wherein a user previews an image using a built-in display device (e.g., a LCD device). It will be recalled from the above discussion that it is desirable to reduce the bandwidth usage during such a preview operation because of the multi-tasking that is performed in that mode. Accordingly, a preferred embodiment utilizes the method of halving the X-dimension to transfer image data across the system bus during preview mode, thereby reducing the amount of bandwidth required for the image data during such a multi-tasking mode. However, it should be recognized that the system may be implemented to utilize this method to reduce the required bandwidth during any mode of operation, and the scope of the present invention is intended to encompass any such implementation.

Provision for X-doubling is provided in a preferred embodiment according to the above-described manner, but nevertheless, if one were, say, to provide pixel 1, pixel 3, pixel 1, pixel 3 within the above-described methodology, certain adverse effects might be propagated, such as ghosted images, etcetera. Notwithstanding this, it is possible for alternative embodiments to utilize other techniques such as sampling (odd, even, pairing, etc.) combined with filtering (low pass, etc.) as known in the art of sampling and filtering, in conjunction with the above methodology. As such, the alternating pixel replication process described above eliminates much of the redundancy called for by the NTSC encoder 13 from being communicated across the system bus 6. The redundant data, not visible to the eye, is thereby culled from the data stream and the display is, consequently, sent only half as much data. Consequently, the X-dimension halving/doubling methodology of a preferred embodiment will reduce the bandwidth of system bus 6 by a factor of 2, while still providing sufficient data to NTSC encoder 13 and LCD display 14.

The foregoing has outlined rather broadly the features and technical advantages of the present invention in order that the detailed description of the invention that follows may be better understood. Additional features and advantages of the invention will be described hereinafter which for the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

## Claims

1. A method for efficiently communicating image data within a device 100, while providing sufficient image data for a display 14, 16, said method comprising:
receiving an original amount of image data;
reducing said original amount of image data in one dimension resulting in reduced data;
transmitting said reduced data across a communication bus 6;
scaling said reduced data back to said original amount of data; and
displaying said original amount of data on a display.

2. A computer hardware apparatus for efficiently communicating image data within a device 100, while providing sufficient image data for a display 14, 16, said apparatus comprising:
an image capture device 1 that captures an original amount of image data;
a first image transformation module 18, 19, 20 that reduces said original amount of image data in one dimension, resulting in reduced data;
a communication bus 6 that transmits said reduced data to a display module 11;
said display module comprising a second image transformation module 17 that scales said reduced data back to said original amount of data; and
a display that displays said original amount of data.

3. An image capture and display device 100 that is capable of capturing an image and displaying said image on a display 14, 16, said image capture and display device comprising:
a means 1 for capturing an original amount of image data;
a means 18, 19, 20 for reducing said original amount of image data in one dimension, resulting in reduced data;
a means 6 for communicating said reduced data;
a means 17, coupled to said means for communicating, for scaling said reduced data back to said original amount of data; and
a means 14, 16 for displaying said original amount of data.

4. The method of claim 1 wherein said device 100 is a digital camera, or the apparatus of claim 2 wherein said computer hardware apparatus is a digital camera.

5. The method of claim 1, wherein said reducing said original amount of data in one dimension further comprises halving said original amount of data in one dimension, and wherein said scaling said reduced data back to said original amount of data further comprises doubling said one dimension of said reduced data.

6. The method of claim 1 or the image capture and display device 100 of claim 3, wherein said one dimension is the X-dimension of the image data.

7. The method of claim 1, further comprising:
encoding said image data before displaying said data on a display.

8. The method of claim 7, wherein said encoding further comprises encoding said image data according to a NTSC/PAL format.

9. The apparatus of claim 2, further comprising:
an encoding module 13 that receives said original amount of data and encodes said data to a proper format for displaying on said display 14, 16.

10. The apparatus of claim 9, wherein said encoding module 13 is a NTSC/PAL encoder.
